# EUROPÄISCHE PATENTANMELDUNG

(11) **EP 2 372 037 A1**
(43) Veröffentlichungstag der Anmeldung: **05.10.2011**
(21) Anmeldenummer: 10405057.0
(22) Anmeldetag: 22.03.2010
(51) Int. Cl.: E04F 13/08, F16B 13/12, F16B 13/06, F16B 13/00, E04B 1/74

(54) **Befestigungsvorrichtung**

(71) Anmelder: Rogger Fasteners AG, 3257 Grossaffoltern (CH)
(72) Erfinder: Rogger, Adrian, 3250 Lyss (CH); Rogger, Marcel, 3257 Grossaffoltern (CH)
(74) Vertreter: Roshardt, Werner Alfred

(57) **Zusammenfassung**

Die Erfindung betrifft eine Befestigungsvorrichtung zum Befestigen eines Bauteils, insbesondere eines Dämmstoffkörpers an einem Baukörper. Die Befestigungsvorrichtung umfasst einen vorderen Abschnitt mit einer Verankerungsvorrichtung (5) zum Verankern der Befestigungsvorrichtung im Baukörper und einen hinteren Abschnitt mit einem Spreizmechanismus (7). Bei Betätigung des Spreizmechanismus (7) drücken sich zum Fixieren des Bauteils mindestens ein beweglicher Halteteil (9.1 - 9.4) in das Bauteil ein. Der Halteteil (9.1 - 9.4) weist ein gelagertes Ende und ein quer zu einer Längsrichtung der Befestigungsvorrichtung abspreizendes Ende auf, wobei das gelagerte Ende in Längsrichtung der Befestigungsvorrichtung während des Abspreizens des abspreizenden Endes ortsfest bezüglich dem vorderen Abschnitt der Befestigungsvorrichtung ist.
Zudem kann der Spreizmechanismus (7) ein mit dem mindestens einen Halteteil (9.1 - 9.4) zusammenwirkendes Spreizteil (8.1 - 8.4) aufweisen, wobei sich insbesondere das eine Ende des Spreizteils (8.1 - 8.4) bei Betätigung des Spreizmechanismus (7) quer zur Längsrichtung der Befestigungsvorrichtung bewegt und dabei das abspreizende Ende des Halteteils (9.1 - 9.4) stützt.

## Beschreibung

Die Erfindung betrifft eine Befestigungsvorrichtung zum Befestigen von Bauteilen an einem Baukörper, insbesondere von weichen bzw. leicht deformierbaren Bauteilen wie Dämmstoffkörper. Die Befestigungsvorrichtung umfasst einen vorderen Abschnitt mit einer Verankerungsvorrichtung zum Verankern der Befestigungsvorrichtung im Baukörper und einen hinteren Abschnitt mit einem Spreizmechanismus. Der Spreizmechanismus weist mindestens einen beweglichen Halteteil zum Fixieren des Bauteils auf, der sich bei Betätigung des Spreizmechanismus in das Bauteil eindrückt. Der Halteteil verfügt über ein gelagertes Ende und ein quer zu einer Längsrichtung der Befestigungsvorrichtung abspreizendes Ende.

### Stand der Technik

Aus der EP 1 798 358 A2 ist ein Befestigungselement für die Befestigung von Dämmstoffplatten an einem Untergrund bekannt. Das Befestigungselement besteht aus einem Dübelschaft, einer Segmenthülse und einem Spreizelement (z. B. einem Spreiznagel oder einer Schraube). Die Segmente der Segmenthülse sind schneidenartig beziehungsweise dornartig ausgestaltet und schneiden sich während eines Aufspreizvorgangs in die Dämmstoffplatte ein. Während des Aufspreizvorgangs werden die Segmente separiert und an einem Ende des Dübelschafts von selbigem weggespreizt. Die dadurch an ihrem dem Untergrund zugewandten Ende aufgespreizte Segmenthülse schafft eine Verbindung zwischen dem Befestigungselement und der Dämmstoffplatte, wobei das Befestigungselement in der Dämmstoffplatte versenkt ist.

Die EP 1 691 086 A1 beschreibt einen Dämmstoffhalter zum Anbringen von Dämmstoffplatten an einem tragenden Untergrund. Der Dämmstoffhalter besteht aus einem Dübel, einem die Dämmstoffplatte durchsetzenden Halterschaft und einem daran anschliessenden Halterteller. Der Halterteller wird durch Abstützelemente gebildet, welche mit einem hinteren Ende des Halterschaftes schwenkbar verbunden sind und an ihren Stirnflächen Schneidvorrichtungen zum Einschneiden in die Dämmstoffplatte aufweisen. Die Abstützelemente sind von einer Montagestellung (in Richtung eines vorderen Endes des Halterschaftes weisend) in eine Haltestellung (seitlich vom Halterschaft abstehend) verschwenkbar. In der Haltestellung sind die Abstützelemente am dem Untergrund zugewandten Ende aufgespreizt und dadurch in der Dämmstoffplatte verankert. Der Dämmstoffhalter kann Spreizelemente zur Zwangsspreizung des Haltetellers aufweisen und kann in die Dämmstoffplatte versenkt werden.

Sowohl die EP 1 798 358 A2 als auch die EP 1 691 086 A1 beschreiben Vorrichtungen zum Befestigen von Dämmstoffplatten. Beide Vorrichtungen können in den Dämmstoffplatten versenkt und darin verankert werden, indem sich Spreizelemente von der Vorrichtung abspreizen. Bei beiden vorbekannten Lösungen weisen die Spreizelemente schneidenartige Enden auf, durch welche sich die Spreizelemente während des Abspreizens in die Dämmstoffplatten schneiden. Dies ist ein bedeutender Nachteil, weil sich die schneidenartigen Enden der Spreizelemente auch noch nach dem Abspreizen weiter in die Dämmstoffplatten einschneiden können. Durch z. B. Bewegungen, Spannungen, Druck oder auch Vibrationen der Dämmstoffplatten oder der Befestigungsvorrichtungen kann das um die Spreizelemente liegende Material der Dämmstoffplatten beschädigt werden. Im Fall von weichen Dämmstoffplatten kann auch etwa ein Bereich einer Dämmstoffplatte einfach entgegengesetzt der Schneidrichtung der Spreizelemente zusammengedrückt werden, weil der Schneidwiderstand in Schneidrichtung der Spreizelemente zwecks einfachem und widerstandsminimiertem Abspreizens optimiert ist.

### Darstellung der Erfindung

Aufgabe der Erfindung ist es, eine dem eingangs genannten technischen Gebiet zugehörende Vorrichtung zu schaffen, welche über einen Spreizmechanismus zur Verankerung im Bauteil verfügt, die nach dem Verankern fest und stabil mit dem Bauteil verbunden ist.

Die Lösung der Aufgabe ist durch die Merkmale des Anspruchs 1 definiert. Gemäss der Erfindung kann ein Bauteil und insbesondere ein Dämmstoffkörper durch eine Befestigungsvorrichtung an einem Baukörper befestigt werden. Die Befestigungsvorrichtung umfasst einen vorderen Abschnitt mit einer Verankerungsvorrichtung zum Verankern der Befestigungsvorrichtung im Baukörper und einen hinteren Abschnitt mit einem Spreizmechanismus. Der Spreizmechanismus weist mindestens einen beweglichen, sich bei Betätigung des Spreizmechanismus in das Bauteil eindrückenden Halteteil zum Fixieren des Bauteils auf, wobei der Halteteil ein gelagertes Ende und ein quer zu einer Längsrichtung der Befestigungsvorrichtung abspreizendes Ende hat. Das gelagerte Ende ist dabei in Längsrichtung der Befestigungsvorrichtung während des Abspreizens des abspreizenden Endes ortsfest bezüglich dem vorderen Abschnitt der Befestigungsvorrichtung.

Der Vorteil eines Halteteils mit einem an der Befestigungsvorrichtung gelagerten Ende liegt darin, dass der Spreizmechanismus das Halteteil durch eine Klappbewegung in das Bauteil drückt. Das Halteteil muss sich daher nicht in das Bauteil einschneiden und somit weder schneidenartige Enden noch eine dornenartige Form aufweisen. Die Klappbewegung erlaubt es dem Halteteil, sich gegebenenfalls kontinuierlich und kontrolliert gegen das Bauteil zu drücken und sich dadurch im Bauteil zu verankern. Es kann von besonderem Vorteil sein, wenn das Halteteil das Bauteil durch die Klappbewegung in Richtung des Aufklappens lokal zusammendrückt, da somit dieser Bereich des Bauteils verdichtet und dadurch verstärkt wird.

Als optionales Merkmal kann der Spreizmechanismus ein mit dem mindestens einen Halteteil zusammenwirkendes Spreizteil aufweisen, wobei sich z. B. das eine Ende des Spreizteils bei Betätigung des Spreizmechanismus quer zur Längsrichtung der Befestigungsvorrichtung bewegt und dabei das abspreizende Ende des Halteteils stützt.

Der Spreizteil kann dadurch, dass sich ein Ende zusammen mit einem Ende des Halteteils quer zur Längsrichtung der Befestigungsrichtung bewegt, den Halteteil während des ganzen Abspreizprozesses und auch in der finalen Stellung stützen. Insbesondere kann der Halteteil durch eine kontinuierlich geführte Bewegung mit einer stufenlos wählbaren Kraft in das Bauteil gedrückt und arretiert werden. Dank des Spreizteils weist der Spreizmechanismus eine hohe Festigkeit auf, und die Bewegung und Verankerung des Halteteils kann durch einen beispielsweise regenschirmartigen Mechanismus gewährleistet und kontrolliert werden.

Allerdings muss der Spreizteil den Halteteil nicht zwingend stützen, sondern kann den Halteteil auch ziehen oder auf andere Weise bewegen. Der Spreizteil kann z. B. auch in Längsrichtung der Befestigungsvorrichtung bewegt werden und beispielsweise keilförmig sein, oder es kann auch ganz auf einen Spreizkeil verzichtet werden.

Ein weiteres optionales Merkmal ist es, wenn der mindestens eine Halteteil eine dem Bauteil zugewandte Seite besitzt, die flächig-stumpf ausgebildet ist.

Mit flächig-stumpfer Seite ist einerseits eine Seite eines Objekts mit einer (verglichen mit anderen Seiten) grossen Oberfläche gemeint, in vielen Fällen auch Breitseite genannt. Andererseits soll die Form der flächig-stumpfen Seite grösstenteils von platter bzw. flacher Natur sein, also nicht z. B. spitzig oder schneidkantenartig. Eine flächig-stumpf ausgebildete Seite hat den Vorteil, dass sie, wenn sie gegen weiche oder deformierbare Materialien gepresst wird, einerseits durch die relativ grosse Oberfläche guten Halt findet und gut mit Druck belastbar ist (bzw. einen hohen Anpressdruck erlaubt), und andererseits unter Druckbelastung nicht aus dem Material herausreissen kann. Beim Drücken der flächig-stumpfen Seite eines Objekts an ein Material soll ein (vorzugsweise ansteigender) Anpressdruck entstehen, wobei nicht primär ein Eindringen, Einstechen und/oder Einschneiden des Objekts in das Material angestrebt wird. Idealerweise drückt die flächigstumpfe Seite des Halteteils während des Abspreizens einen Bereich des Bauteils zusammen und erhöht damit in Richtung des angewendeten Drucks die Widerstandsfestigkeit des Materials, was wiederum in einer solideren Befestigung des Bauteils durch den abgespreizten Halteteil resultiert.

Alternativ kann die dem Bauteil zugewandte Seite auch anders als flächig-stumpf ausgebildet sein, etwa stark gebogen, spitzig, kantig, strukturiert und/oder netz- bzw. gitterartig. Dadurch kann die Funktion des Halteteils im Zusammenspiel mit den Materialeigenschaften des Bauteils optimiert werden.

Bevorzugt, aber optional sind mindestens zwei Spreizteile vorgesehen, wobei diese Spreizteile an einem Spreizelement ausgebildet sind, welches sich relativ zur Befestigungsvorrichtung frei bewegen kann.

Ein separates Spreizelement mit daran ausgebildeten Spreizteilen kann relativ zur Befestigungsvorrichtung frei bewegt werden, und es gewährleistet somit, dass sich alle Spreizteile gleichmässig und gleichzeitig bewegen. Dies erlaubt, die an der Befestigungsvorrichtung gelagerten Halteteile gegebenenfalls kontrolliert aufzuspreizen. Zudem kann ein einzelnes Spreizelement einen geeigneten zentralen Ansatzpunkt zur Übertragung der Spreizkraft durch die Spreizteile auf die Halteteile bieten. Eine Zusammenführung aller Spreizteile auf einem einzigen Spreizelement ist besonders vorteilhaft, weil sich dadurch die Anzahl der beweglichen Teile reduziert und sich die Mechanik im Spreizmechanismus vereinfacht. Zudem lässt sich ein Spreizelement kostengünstig herstellen und rasch in die Befestigungsvorrichtung einfügen.

Alternativ können auch mehrere Spreizelemente und/oder zusätzlich einzelne Spreizteile verwendet, oder es kann gänzlich auf Spreizelemente verzichtet werden.

Ein weiteres optionales, aber in der Praxis häufig zweckdienliches Merkmal besteht darin, dass in einem mittleren Abschnitt zwischen dem vorderen und dem hinteren Abschnitt ein Distanzteil vorgesehen ist, an welchem der mindestens eine Halteteil angeformt ist.

Ein Distanzteil zwischen vorderem und hinterem Abschnitt der Befestigungsvorrichtung schafft einen klar bestimmten Abstand zwischen dem Baukörper und dem Spreizmechanismus, welcher das Bauteil fixiert. Auf diese Weise wird bei bekanntem Abstand von Bauteil und Baukörper (anliegend oder beabstandet) der Spreizmechanismus in einer klar bestimmten Tiefe des Bauteils verankert. Dies erlaubt eine Optimierung der Verankerung durch eine Anpassung der Verankerungstiefe unter Berücksichtigung der Materialeigenschaften des Bauteils (z. B. der Härte, Dauerbelastbarkeit, Sprödigkeit, Wärmeleitfähigkeit). Der Distanzteil kann dabei eine festgelegte Länge besitzen oder längenverstellbar konzipiert sein, etwa durch arretierbare oder verrastbare, gegeneinander verschiebbare Elemente oder entfern- bzw. hinzufügbare Zwischenstücke, wobei der Distanzteil während und nach dem Abspreizen der Halteteile in seiner Länge konstant bleibt.

Es kann beispielsweise aber auch ein weiterer Mechanismus im Distanzteil vorgesehen sein, welcher nach dem Abspreizen der Halteteile eine Veränderung der Distanz zwischen Spreizmechanismus und Baukörper erlaubt, etwa eine Deformationszone um die Halteteile zusätzlich in das Bauteil zu drücken. Dies ist von besonderem Vorteil, wenn z. B. das Bauteil relativ zum Baukörper Spiel hat und nachgezogen werden soll oder wenn der Anpressdruck erhöht werden soll.

Die Befestigungsvorrichtung kann aber auch ohne Distanzteil gefertigt werden.

Im Sinn eines weiteren optionalen Merkmals können die Halteteile und das Distanzteil am selben Stück (also einstückig mit) der Befestigungsvorrichtung ausgebildet sein.

Während und nach dem Abspreizen der abspreizbaren Enden der Halteteile liegen die gelagerten Enden der Halteteile ortsfest zum vorderen Abschnitt, und das Distanzteil hat die Aufgabe, in diesem Zeitraum einen definierten Abstand von Baukörper und Spreizmechanismus zu gewährleisten. Dadurch liegt in diesem Zeitraum im Regelfall auch das Distanzteil ortsfest zum vorderen Abschnitt. Dies erlaubt eine konstruktive Vereinfachung, indem die Halteteile und das Distanzteil (oder bei längenvariablen Distanzteilen deren hinteres Ende) am selben Stück der Befestigungsvorrichtung ausgebildet werden. Auf diese Art können die Produktion vereinfacht, die Anzahl der Teile reduziert und die Kosten minimiert werden.

Halteteile und Distanzteil können aber auch an verschiedenen Stücken der Befestigungsvorrichtung ausgebildet sein. Dies z. B. dann, wenn es von Vorteil ist, dass die genannten Teile aus verschiedenen Materialien gefertigt sein sollten.

Ein weiteres optionales Merkmal der Befestigungsvorrichtung kann sein, dass ein Metallstift sowohl mit der Verankerungsvorrichtung als auch dem Spreizmechanismus gekoppelt ist, um diese, insbesondere gleichzeitig zu betätigen.

Metallstifte haben sich in allen Formen, Materialvarianten und Anwendungen in der Befestigungstechnik bewährt und sind kostengünstig, tragfähig und beständig. Neben z. B. Nägeln sind vor allem Schrauben sehr gut für Befestigungszwecke geeignet, so etwa Selbstbohrschrauben oder Schrauben für den Einsatz in spreizbaren Dübeln. Einen Metallstift nicht nur für die Verankerungsvorrichtung mit dem Baukörper, sondern auch im Spreizmechanismus zur Verankerung im Bauteil zu verwenden erlaubt es, sich die positiven Eigenschaften des Metallstifts hinsichtlich der Befestigungstechnik zweifach zunutze zu machen. So können unter anderem Ressourcen geschont und Kosten sowie Gewicht gespart werden.

Ein weiteres optionales, aber besonders vorteilhaftes Merkmal besteht darin, dass der Metallstift die Verankerungsvorrichtung und den Spreizmechanismus wenigstens teilweise zeitgleich betätigt. Damit kann bei entsprechender Konzeption die Montage der Befestigungsvorrichtung vereinfacht und beschleunigt werden. Ein zusätzlicher Vorteil von Schrauben ist das stufenlose, kontrollierbare und unterbrechbare Voranschreiten des Befestigungsprozesses, welcher z. T. auch reversibel sein kann. Dadurch kann auch die auf die Befestigungsvorrichtung ausgeübte und von dieser weitergegebene Kraft gut dosiert werden.

Es können aber auch mehrere Metallstifte verwendet werden, und die Verankerungsvorrichtung und der Spreizmechanismus müssen weder gleichzeitig betätigbar noch mit demselben Metallstift gekoppelt sein. Es kann anwendungsabhängig von Vorteil sein, den Spreizmechanismus separat bedienbar zu gestalten. Anstelle des Metallstifts kann auch ein Stift aus anderem Material verwendet werden, welcher als Betätigungs- und/oder Verbindungsteil dienen kann. So ist beispielsweise die Verwendung von Kunststoff, Verbundstoffen, Holz und/oder Naturharzen von besonderem Vorteil, wenn etwa deren Wärmeleiteigenschaften Wärmebrücken verkleinern oder verhindern können.

Ein weiteres optionales Merkmal besteht darin, dass mindestens ein Halteteil über mindestens einen Greifpunkt verfügt, an welchem ein Spreizteil Halt finden kann.

Durch einen Greifpunkt am Halteteil kann ein Spreizteil am Halteteil Halt finden und so die Spreizkraft (resp. die entgegenwirkende Widerstandskraft) gezielt übertragen. Dies gewährleistet eine sichere und geführte Bewegung des Halteteils und verschafft Kontrolle über den Spreizvorgang. Ein Greifpunkt verbessert auch die Wirkung der Spreizteile als Stützelemente nach dem Abspreizen und dadurch die Stabilität des Spreizmechanismus. Es können natürlich auch mehrere Greifpunkte vorgesehen sein.

Je nach Funktionsweise des Spreizmechanismus kann auf Greifpunkte am Halteteil verzichtet werden, oder sie sollten sogar vermieden werden, so z. B. wenn der Spreizteil wie ein Keil eingesetzt werden soll.

Im Sinn eines weiteren optionalen Merkmals kann zwischen Spreizelement und Halteteil ein separater Führungsteil vorgesehen sein, welcher das Spreizelement in Längsrichtung verdrehsicher führt.

Der Vorteil eines Führungsteils liegt in der geführten Bewegung des Spreizelementes und der dadurch verbesserten Kontrolle des Abspreizens. Eine verdrehsichere Führung ist besonders bei der Anwendung von Drehbewegungen wie etwa bei Schrauben von grosser Bedeutung. Ist ein separater Führungsteil vorgesehen, so kann unter Umständen die Produktion vereinfacht werden, weil auf diese Weise komplizierte Teile des Spreizmechanismus in einzelne, zusammenfügbare aber leicht zu produzierende Komponenten aufgeteilt werden.

Auf einen Führungsteil kann aber auch verzichtet werden, besonders wenn sich kein Ende des Spreizteils quer zur Längsrichtung der Befestigungsvorrichtung bewegt. Denkbar sind etwa keilförmige Spreizteile oder ein konisches oder gar halbkugelförmiges Spreizteil, wobei letztere bei geeigneter Montage keine Verdrehsicherung benötigen.

Ein weiteres optionales Merkmal besteht darin, dass der Führungsteil einen Anschlag für das Spreizelement aufweist, so dass eine Bewegung des Spreizelementes in Längsrichtung begrenzt ist.

Die Bewegung des Spreizelementes in Längsrichtung ist im Regelfall mit dem Ausmass der Abspreizbewegung gekoppelt, und ein Anschlag zur Begrenzung der Bewegung des Spreizelementes begrenzt somit auch die Bewegung der Halteteile. Dadurch kann verhindert werden, dass die Abspreizbewegung über ein vorbestimmtes Mass hinausgeht und aus dem vorgesehenen, optimierten Bewegungsbereich gerät.

Ein Anschlag für das Spreizelement kann allerdings auch anderswo an der Befestigungsvorrichtung ausgestaltet sein als am Führungsteil oder auch gänzlich weggelassen werden. Zusätzlich oder alternativ zu einem Anschlag am Führungsteil kann die Bewegung des Spreizelementes in Längsrichtung auch durch andere Methoden begrenzt werden; bei der Verwendung eines verschraubbaren Metallstifts z. B. durch einen oder mehrere Stellringe oder andere Markierungen auf einem Schraubwerkzeug, welche ein Abmessen und/oder Limitieren einer Einschraubtiefe erlauben. Besonders vorteilhaft ist ein auf dem Schraubwerkzeug befestigbarer und verschiebbarer Stellring mit einem in das Bohrloch versenkbaren Distanzstück und einem darauffolgenden Anschlag für das Bauteil. Nach dem Einführen bzw. Einschieben der auf das Schraubwerkzeug aufgesteckten Befestigungsvorrichtung in das Bohrloch wird das Distanzstück des Stellrings von aussen bündig zur Oberfläche des Bauteils ausgerichtet und der Stellring am Schraubwerkzeug fixiert. Die Befestigungsvorrichtung wird nun eingeschraubt, bis das Distanzstück vollständig im Bauteil versenkt ist, der Anschlag des Stellrings an der Oberfläche des Bauteils anschlägt und eine durch die Länge des Distanzstücks festgelegte Einschraubtiefe erreicht ist.

Optional aber nützlich ist es, wenn die Befestigungsvorrichtung eine Verdrehsicherung gegenüber dem Bauteil aufweist.

Besonders wenn beim Verankern der Befestigungsvorrichtung im Baukörper und/oder im Bauteil Drehbewegungen verwendet werden, ist eine Verdrehsicherung von grossem Vorteil. Eine Verdrehsicherung kann dabei z. B. aus Stützen, Haken oder anderen Rotationssymmetrie-brechenden Elementen bestehen, oder auch durch eine eckige Grundform oder eine geeignet raue oder haftende Oberfläche gewährleistet werden. Besonders geeignet und einfach herzustellen sind flügelartige Ausformungen, welche sich besonders gut in Bauteilen aus weichen und deformierbaren Materialien wie etwa Dämmstoffplatten anwenden lassen. Die Verdrehsicherung kann genauso gut am oder im Bauteil greifen, als auch am oder im Baukörper oder auch beides.

Auf eine Verdrehsicherung kann auch verzichtet werden, insbesondere wenn keine Drehbewegungen getätigt werden.

Optional und gleichzeitig besonders praktisch ist es, wenn die Befestigungsvorrichtung einen Anschlag aufweist, welcher eine Eindringtiefe in den Baukörper auf eine maximale Länge begrenzt.

Eine begrenzte maximale Eindringtiefe in den Baukörper erlaubt die genaue Positionierung der Befestigungsvorrichtung und dadurch eine gute Kontrolle über die Einbautiefe des Spreizmechanismus im Bauteil. Auf diese Weise kann die optimale Einbautiefe zur Maximierung von z. B. der Festigkeit der Verankerung oder der Wärmedämmung gewährleistet werden. Falls die Montage in existierende Löcher vorgesehen ist, spielt deren Tiefe über einem unteren Grenzwert keine Rolle, was gegebenenfalls nötiges Vorbohren vereinfacht.

Auf einen Anschlag kann aber auch verzichtet werden, und je nach Art der Verankerungsvorrichtung kann er auch überflüssig sein.

Bevorzugt ist das vordere Ende des Halteteils an der Befestigungsvorrichtung gelagert und das hintere Ende abspreizbar.

Indem sich das hintere Ende des Halteteils von der Befestigungsvorrichtung abspreizt, öffnet sich der Spreizmechanismus regenschirmartig nach vorne gegen den Baukörper zu. Dies hat zur Folge, dass das Bauteil durch die Halteteile ebenfalls gegen den Baukörper gepresst wird, wobei möglichst viel Material des Bauteils zwischen Halteteil und Baukörper zu liegen kommt und dieses Material gegebenenfalls auch verdichtet wird. Drückt das Bauteil vom Baukörper weg, so wird es von einer mehr oder weniger gegen aussen gewölbten Oberfläche des Spreizmechanismus zurückgehalten. Dies ist in vielen Fällen vorteilhafter als von einer gegen innen gewölbten Oberfläche zurückgehalten zu werden, weil sich der Druck nicht trichterartig konzentriert, sondern besser verteilt und vorteilhafterweise auch vom durch die Befestigungsvorrichtung entstandenen Loch weggeleitet wird.

Alternativ kann sich das Halteteil auch am vorderen Ende Abspreizen oder sich an beiden Enden von der Befestigungsvorrichtung entfernen und sich gegen das oder in das Bauteil drücken.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung des Ausführungsbeispiels verwendeten Zeichnungen zeigen:
- Fig. 1: seitlicher Schnitt der Befestigungsvorrichtung vor dem Abspreizen
- Fig. 2: Ansicht der Ausführungsform in Fig. 1 während des Abspreizens
- Fig. 3: Ansicht der Ausführungsform in Fig. 1 nach dem Abspreizen
- Fig. 4: perspektivische Ansicht der Ausführungsform in Fig. 1
- Fig. 5: schematische Darstellung eines regenschirmartigen Mechanismus
- Fig. 6: senkrechte Seitensicht auf die Ausführungsform in Fig. 1
- Fig. 7.1 - 7.3: schematische Darstellung einer Deformationszone

Grundsätzlich sind in den Figuren gleiche Teile mit gleichen Bezugszeichen versehen.

### Wege zur Ausführung der Erfindung

Die im Rahmen der nachfolgenden Beschreibung von Ausführungsbeispielen verwendeten Massangaben dienen nur zur Illustration der jeweiligen Grössenverhältnisse bei spezifischen Ausführungsformen. Die Grössenangaben sollen nur die bevorzugten, nicht aber die zwingenden Grössenordnungen der Vorrichtung und ihrer Elemente klären und insbesondere die Proportionen bzw. die Grössenverhältnisse aller Elemente untereinander demonstrieren. Alle Grössen können je nach Anwendung variiert werden, wobei Veränderungen von bis zu 20 % als übliche Abweichung zu verstehen sind und wobei auch eine Veränderung um den Faktor 5 in beide Richtungen (i. e. grösser und kleiner) nicht ausgeschlossen ist (z. B. für spezielle Anwendungen).

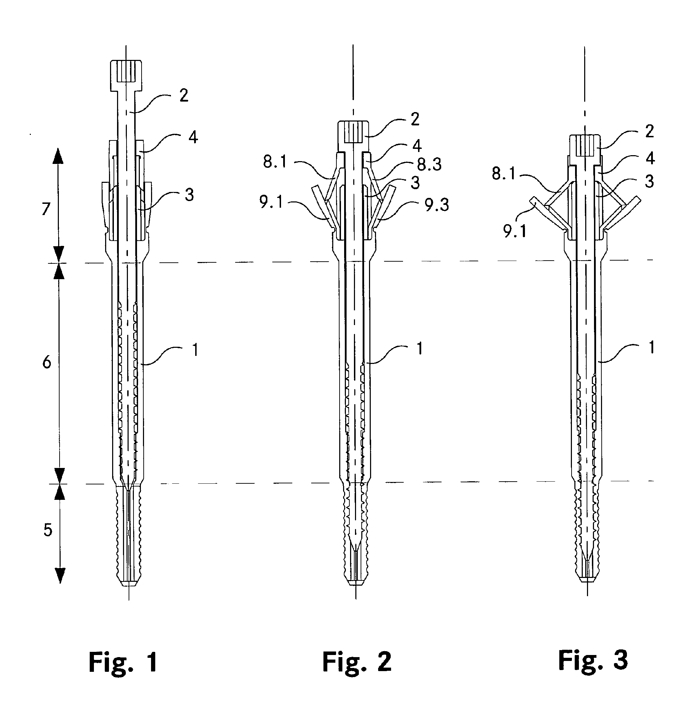

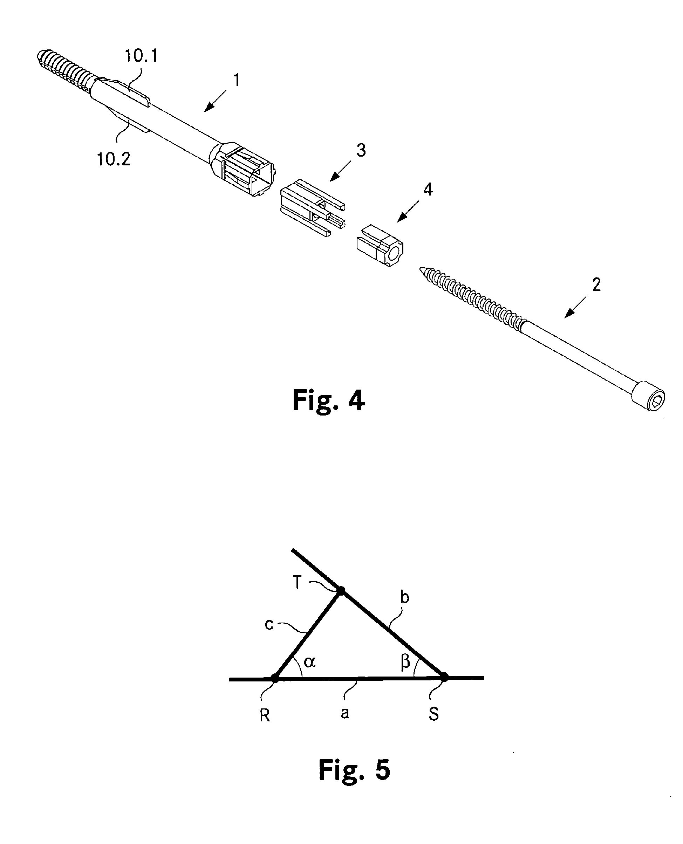

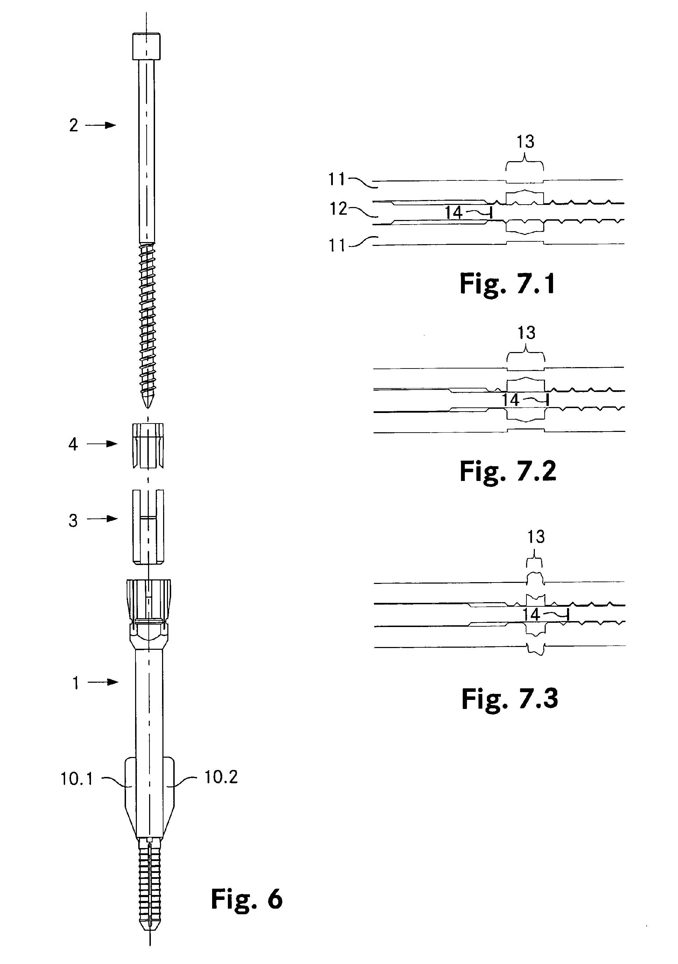

In Fig. 1 ist ein seitlicher Schnitt einer Ausführungsform der erfindungsgemässen Vorrichtung schematisch dargestellt. An dieser Stelle sei auch auf Fig. 5 und 6 hingewiesen, welche denselben Gegenstand von hinten bzw. in einer perspektivischen Darstellung zeigen. Die Vorrichtung besteht aus einem Grundkörper 1, einem Metallstift 2, einem Führungsteil 3 und einem Spreizelement 4. Die Vorrichtung kann in drei verschiedene Abschnitte aufgeteilt werden: Einen vorderen Abschnitt mit einer Verankerungsvorrichtung 5, einen Distanzteil 6 als mittleren Abschnitt und einen hinteren Abschnitt mit einem Spreizmechanismus 7. In Fig. 1 befindet sich der Spreizmechanismus 7 in geschlossenem Zustand i. e. im Zustand vor dem Abspreizen. Alle in der anschliessenden Beschreibung benutzten relativen Orientierungsbezeichnungen wie vorne und hinten beziehen sich auf dieselben Richtungen, wie sie für die Abschnitte in Fig. 1 definiert worden sind.

Der Grundkörper 1 besteht aus Kunststoff und ist insgesamt 130 mm lang, wobei die Gesamtlänge der Befestigungsvorrichtung je nach Montagezustand 150 - 180 mm beträgt. Der Grundkörper 1 erstreckt sich über den vorderen, mittleren und hinteren Abschnitt, wobei er im 35 mm langen vorderen Abschnitt die Form und Funktion eines handelsüblichen Spreizdübels mit einem Aussendurchmesser von 8 mm aufweist und somit einen wichtigen Teil der Verankerungsvorrichtung 5 darstellt. In der hier dargestellten Ausführungsform weist die Aussenseite der Verankerungsvorrichtung 5 an ihrem vorderen Ende einen 4 mm langen Kegelstumpf als Spitze auf und ist auf seiner restlichen Länge mit zwölf ringförmigen, im Profil betrachtet halbrunden Rillen versehen, welche 2 mm breit und 1 mm tief sind und wie parallele Ringe senkrecht zur Längsachse die Aussenseite umlaufen. Im mittleren Abschnitt bildet der Grundkörper 1 die Aussenhülle des Distanzteils 6, welche weitestgehend von hohlzylindrischer Form und 70 mm lang ist. Beim Übergang vom vorderen Abschnitt zum hohlrylinderförmigen Distanzteil 6 im mittleren Abschnitt steigt dabei der Aussendurchmesser des Grundkörpers stufenartig auf 10 mm an. Der Grundkörper 1 reicht auf einer Länge von 25 mm in den hinteren Abschnitt, wobei die Aussenform von der Zylinderform des Distanzteils 6 im vorderen Teil des hinteren Abschnitts auf einer Distanz von 5 mm in eine Quaderform mit quadratischem Querschnitt von 13 mm Seitenlänge übergeht.

Der Grundkörper 1 ist bis auf seine verschlossene Spitze am vorderen Ende über seine gesamte Länge mit einer axial zentriert liegenden, lochartigen Öffnung versehen, so dass der grösste Teile des Metallstifts 2 von hinten in den Grundkörper eingebracht werden kann. Im Bereich des Spreizmechanismus 7 befinden sich in nicht aufgespreiztem Zustand auch Teile des Führungsteils 3 und des Spreizelements 4. Die Öffnung des Grundkörpers 1 entspricht im Bereich der Verankerungsvorrichtung 5 den üblichen Öffnungen von Dübeln und weist in Längsrichtung eine kreuzförmige Form auf, welche auf zwei Seiten in Form von Schlitzen die gerillte Oberfläche durchbrechen. Im Distanzteil 6 ist die Öffnung weitestgehend rund ausgebildet und weist einen Durchmesser von 8 mm auf, wobei in den vordersten 15 mm des Distanzteils 6 vier in Längsrichtung verlaufende und in Richtung der Längsmittelachse des Grundkörpers 1 herausragende Rillen von je 1 mm Höhe und Breite einem Aussengewinde des Metallstifts 2 Halt bieten. Der Distanzteil 6 dient der Gewährleistung eines bestimmten Abstands von Baukörper und Spreizmechanismus 7 und sollte unter anderem eine genügende Festigkeit und gewisse thermische Eigenschaften aufweisen und zur einfachen Montage kompakt dimensioniert sein, wobei Material und Konstruktionsweise variieren können. Im vorliegenden Fall einer einfachen rohrartigen Distanzhülse aus Kunststoff reicht eine typische Wandstärke von etwa einem Drittel bis einem Zehntel des Durchmessers. Im Bereich des Spreizmechanismus 7 ist die Öffnung des Grundkörpers 1 weitestgehend von quadratischem Grundschnitt mit einer Kantenlänge von 11 mm und ist gegen hinten offen.

Der Metallstift 2 entspricht einer handelsüblichen Dübelschraube von 130 mm Länge, welche am vorderen, zugespitzten Ende auf einer Länge von 55 mm ein Gewinde aufweist. Hinter dem Gewinde ist der Metallstift 2 auf einer Länge von 60 mm zylindrisch mit einem Aussendurchmesser von 6 mm geformt und endet am hinteren Ende in einem Zylinder mit Aussendurchmesser von 9 mm, welcher einen gegen hinten geöffneten 4 mm Innensechskant beinhaltet.

Fig. 2 zeigt dieselbe Ansicht der gleichen Vorrichtung wie Fig. 1, wobei der Spreizmechanimus 7 etwa zur Hälfte aufgespreizt ist. Im Vergleich mit Fig. 1 ist in Fig. 2 der Metallstift 2 weiter in den Grundkörper 1 hereingeschraubt und reicht vorne schon etwa in die Hälfte des dübelartigen vorderen Abschnitts des Grundkörpers 1. Der zylindrische Kopf am hinteren Ende des Metallstifts 2 drückt das Spreizelement 4 gegen den Führungsteil 3, so dass sich vom Spreizelement 4 vier Spreizteile 8.1 - 8.4 abspreizen.

Das Spreizelement 4 besteht im hinteren Bereich aus einer Ringscheibe von 5 mm Höhe, 9 mm Aussendurchmesser und einem Innendurchmesser von 6 mm. Die Spreizteile 8.1 - 8.4 sind 16 mm lang, 6 mm breit und 1 mm dick und sind in regelmässigen Abständen reihum an der Aussenseite dieser Ringscheibe befestigt. In geschlossener Position des Spreizmechanismus 7 verlaufen die Spreizteile 8.1 - 8.4 der Länge nach parallel zur Längsrichtung der Befestigungsvorrichtung und liegen hinten bündig mit der hinteren Kante der Ringscheibe an. Die Spreizteile 8.1 - 8.4 ragen 11 mm über die Ringscheibe nach vorne und weisen an der vorderen Kante der Ringscheibe des Spreizelements 4 eine der vorderen Kante entlanglaufende Kerbe auf, welche als Knickachse für eine Klappbewegung während des Abspreizens dient. Am vorderen Ende sind die Spreizteile 8.1 - 8.4 auf ganzer Breite gegen die Innenseite in einem Winkel von 45 Grad angefast, so dass die vorderen Enden auf die Aussenseite hin spitzig zulaufen und dadurch festen Halt in entsprechenden auf den Halteteilen 9.1 - 9.4 ausgebildeten Greifpunkten finden. Das Spreizelement 4 wird vorteilhaft in einem Stück aus Kunststoff gefertigt.

Die vier Halteteile 9.1 - 9.4 sind je 11 mm breit, 1 mm dick und 15 mm lang und bilden den hintersten Teil des hinteren Abschnitts des Grundkörpers 1. Die Halteteile 9.1 - 9.4 sind mit Vorteil 1 bis 3 Mal und insbesondere 1.1 bis 2 Mal so lang wie die breiteste Stelle der Befestigungsvorrichtung. Es sind diese Halteteile 9.1 - 9.4, welche in geschlossenem Zustand des Spreizmechanismus 7 der Länge nach parallel zur Längsrichtung der Befestigungsvorrichtung angeordnet sind und dadurch den quadratischen Querschnitt des hinteren Abschnitts nach hinten weiterführen. Die Halteteile 9.1 - 9.4 weisen an ihrem vorderen Ende über ihre ganze Breite eine aussenliegende Kerbe auf, welche als Knickachse für eine Klappbewegung während des Abspreizens dient. Zudem sind die Halteteile 9.1 - 9.4 auf der Aussenseite auf beiden Längsseiten in einem Winkel von 45 Grad angefast und bilden in der Mitte der Aussenseite in Längsrichtung des Spreizmechanismus 7 eine rampenförmige Finne aus. Die Finne ist auf der ganzen Länge des Halteteils 9.1 - 9.4 etwa 2 mm breit und weist an ihrem hinteren Ende auf einer Länge von 6 mm eine Höhe von 1 mm auf. Gegen vorne fällt die Finne der Halteteile 9.1 - 9.4 auf einer Länge von 9 mm linear von einer Höhe von 1 mm bis auf die Oberfläche des Halteteils 9.1 - 9.4 ab. Die Finne dient der mechanischen Verstärkung der Halteteile 9.1 - 9.4 gegen eine Deformation durch den angelegten Druck während und nach dem Abspreizen. Durch die Ausbildung und/oder Befestigung einer Finne können die Halteteile 9.1 - 9.4 gleichzeitig dünn, kompakt und stabil gebaut werden, was Material sparend und von konstruktivem Vorteil ist. Grösse, Form und Anordnung (sowie ggf. die Anzahl) der Finnen sind ein Kompromiss aus Materialersparnis, statischen und funktionalen Aspekten, wobei meist eine möglichst kompakte Form bevorzugt wird. Die Finne verhindert aber nicht nur das Verbiegen der Halteteile 9.1 - 9.4, sondern dient auch der Führung der Befestigungsvorrichtung während des Einbringens in das Bauteil und verhilft den Halteteilen 9.1 - 9.4 in abgespreizter Position zu besserem (Seiten-)Halt. Auf der Innenseite der Halteteile 9.1 - 9.4 sind in der Mitte in Längsrichtung im Abstand von 1 mm zwei parallele Haltestreben von je 1 mm Breite und 1 mm Höhe ausgebildet. Die Haltestreben enden 6 mm vor dem hinteren Ende der Halteteile 9.1 - 9.4 durch eine Abschrägung mit 45 Grad Steigung in gegen innen zeigende Spitzen und bilden dadurch dreieckige Taschen aus, welche als Greifpunkte auf den Halteteilen 9.1 - 9.4 zur Aufnahme der spitzigen Enden der Spreizteile 8.1 - 8.4 dienen. Die Spreizteile 8.1 - 8.4 sind im Regelfall ähnlich lang wie die Halteteile 9.1 - 9.4, und die Greifpunkte liegen mit Vorteil in der hinteren Hälfte der Halteteile 9.1 - 9.4, insbesondere im hinteren Viertel. Derart verkantet führen und stützen sich die Halteteile 9.1 - 9.4 und die Spreizteile 8.1 - 8.4 während des Abspreizens des Spreizmechanismus 7 gegenseitig.

In Fig. 3 befindet sich die bereits in Figs. 1 und 2 dargestellte Befestigungsvorrichtung in ihrer finalen, gänzlich abgespreizten Position. Das Gewinde am vorderen Ende des Metallstifts 2 befindet sich tief in der Verankerungsvorrichtung 5, und der Kopf am hinteren Ende des Metallstifts 2 drückt das Spreizelement 4 bis an den dafür vorgesehenen Anschlag am Führungsteil 3. Durch den Anschlag ist der Spreizmechanismus 7 im Abspreizen begrenzt, und die Halteteile 9.1 - 9.4 können nicht zu weit in das Bauteil gedrückt oder gar nach vorne geklappt werden. Mit Vorteil stehen dabei die Halteteile 9.1 - 9.4 in finaler abgespreizter Position in einem Winkel von 20 bis 70 Grad und insbesondere mit 30 bis 60 Grad von der Längsmittelachse der Befestigungsvorrichtung ab.

Das Führungsteil 3 liegt zwischen dem Grundkörper 1 und dem Spreizelement 4 und besteht aus einem Quader von 18 mm Länge und einem quadratischen Querschnitt von 9 mm Seitenlänge. Der Quader des Führungsteils 3 ist in der Mitte des quadratischen Querschnitts auf seiner ganzen Länge von einem kreisrunden Loch eines Durchmessers von 6 mm durchbohrt. Der Quader ist ausserdem an seiner hinteren quadratischen Stirnfläche an allen vier Kanten in einem Winkel von 45 Grad abgefast, wobei diese abgewinkelten Flächen dazu dienen, die vorderen Enden der Spreizteile 8.1 - 8.4 gegen aussen zu lenken und so den Abspreizvorgang als Führungs- und Gleithilfen zu unterstützen, indem sich das hintere Ende des Führungsteil 3 mit zunehmend weiter nach vorne gedrücktem Spreizelement 3 weiter zwischen die Spreizteile 8.1 - 8.4 und den Metallstift 2 schiebt.

Auf den vier Längskanten des Quaders des Führungsteils 3 befinden sich vier gleichschenklige L-förmige Eckprofile, welche die vier Quaderlängskanten auf der ganzen Länge umfassen und sich darüber hinaus 10 mm nach hinten verlängern. Der Querschnitt der total 28 mm langen Eckprofile besteht aus einem Quadrat einer Seitenlänge von 3 mm, bei welchem an einer Ecke ein kleineres Quadrat einer Seitenlänge von 1 mm ausgespart ist. Die nach vorne gerichteten Spreizteile 8.1 - 8.4 passen genau zwischen die Eckprofile des Führungsteils 3, und die Ringscheibe des Spreizelements 4 lässt sich zwischen den nach hinten herausragenden Teilen der Eckprofile bis an die hintere quadratische Stirnfläche des Quaders des Führungsteils 3 bewegen, welche als Anschlag für das Spreizelement 4 dient und für die Begrenzung des Abspreizens vorgesehen ist. Mit Vorteil ist die Länge der überstehenden Eckprofile des Führungsteil 3 dabei so bemessen, dass das Spreizelement 4 spätestens beim Beginn des Abspreizens der Spreizteile 8.1 - 8.4 von den Eckprofilen mindestens teilweise umfasst und geführt wird. Eine derart ineinandergreifende Verschränkung von Spreizelement 4 und Führungsteil 3 verschafft dem Spreizmechanismus 7 eine hohe Belastbarkeit und Festigkeit bei gleichzeitiger präziser, verdrehsicherer Führung der bewegten Teile während des Abspreizens. Das Führungsteil 3 wird vorteilhaft in einem Stück aus Kunststoff gefertigt.

Fig. 4 bietet eine perspektivische Ansicht der Ausführungsform in Fig. 1, wobei die Einzelteile der Befestigungsvorrichtung einzeln nebeneinander dargestellt sind. Die Verdrehsicherungen 10.1 und 10.2 sind in Fig. 6 genauer beschrieben.

In Fig. 5 ist ein regenschirmartiger Mechanismus schematisch dargestellt. Die Verwendung eines solchen regenschirmartigen Mechanismus ist besonders von Vorteil, wenn eine kontrollierte Spreizbewegung und/oder eine hohe Festigkeit erfordert sind. Mit einem regenschirmartigen Mechanismus wird im Rahmen der Ausführungsbeispiele ein Mechanismus bezeichnet, in welchem sich zwei längliche, an einer auf ihnen fixierten Stelle T miteinander in Kontakt stehenden Objekte c und b relativ zu einer Achse a bewegen. Dabei ist jeweils ein Ende R bzw. S der länglichen Objekte c bzw. b auf der Achse a gelagert, und die Enden R bzw. S und die Kontaktstelle T bilden ein Dreieck, in welchem die an die Achse a angrenzenden Winkel α und β nicht mehr als 90 Grad betragen. Je näher die Enden R und S zueinander stehen, desto weiter liegt die Kontaktstelle T von der Achse a entfernt, also entfernt sich die Kontaktstelle T beim Annähern der Enden R und S von der Achse a, so wie sich ein Regenschirm aufspannt wenn der Schieber gegen die Krone geschoben wird. Auf die Befestigungsvorrichtung der Figs. 1 - 6 übertragen, entspricht (sinngemäss) in einer seitlichen Projektion betrachtet b einem Halteteil 9.1 - 9.4, c einem Spreizteil 8.1 - 8.4, a der Längsachse der Befestigungsvorrichtung, S der Knickachse des gelagerten Endes eines Halteteils 9.1 - 9.4, T einem Greifpunkt auf einem Halteteil 9.1 - 9.4 und R der Knickachse auf dem Spreizelement 4.

Fig. 6 bietet ebenfalls eine Seitenansicht auf dieselbe Ausführungsform wie Figs. 1 - 3, allerdings steht die Seitenansicht der Fig. 6 senkrecht zu den vorgenannten Seitenansichten. Die Befestigungsvorrichtung ist in ihre Einzelteile zerlegt und entlang der Längsrichtung der Befestigungsvorrichtung aufgegliedert dargestellt. Am vorderen Ende des Distanzteils 6 sind die 1 mm dicken, tragflächenartigen Verdrehsicherungen 10.1 - 10.2 angeordnet, welche während der Montage bzw. des Verschraubens ein Verdrehen der Befestigungsvorrichtung im Bauteil verhindern. Die Verdrehsicherungen 10.1 - 10.2 beginnen bündig an der vorderen Kante des Distanzteils 6 und verbreitern sich gegen hinten linear auf einer Länge von 11 mm auf eine Breite von 4 mm. Die Breite von 4 mm behalten die Verdrehsicherungen 10.1 - 10.2 für weitere 18 mm bei und enden danach in einer abgerundeten Ecke und einer senkrecht zur Längsrichtung der Befestigungsvorrichtung liegenden Kante.

In den schematischen Figuren 7.1 - 7.3 ist am Beispiel der konzeptionellen Funktionsweise einer Deformationszone 13 ein optionaler Mechanismus gezeigt, welcher die Distanz zwischen Spreizmechanismus und Baukörper verändern kann. Der optionale Mechanismus ist in der in Fig. 1 gezeigten Ausführungsform nicht enthalten, eignet sich aber besonders für diese oder ähnliche Ausführungsformen, wo Verankerungs- und Spreizmechanismus fest miteinander verkoppelt sind und z. B. nur gemeinsam durch denselben Metallstift betrieben werden können.

Im in den Figs. 7.1 - 7.3 gezeigten Ausschnitt liegt das vordere Ende der Befestigungsvorrichtung rechts und das hintere Ende links. Die Deformationszone 13 ist eine an einem Grundkörper 11 ausgestaltete Stelle, an welcher die Wandstärke des Grundkörpers 11 besonders dünn ist. Vor und hinter der Deformationszone 13 ist eine Öffnung des Grundkörpers 11 so ausgeformt, dass ein darin eingedrehtes Gewinde eines Metallstifts 12 zug- und druckfest fixiert ist. In Fig. 7.1 ist schematisch dargestellt, in welchem Zustand sich eine Befestigungsvorrichtung mit vollständig abgespreiztem Spreizmechanismus 7 und fest fixierter Verankerungsvorrichtung 5 befindet: der Metallstift 12 ist so weit in den Grundkörper 11 eingeschraubt, dass das hier durch einen Strich eingezeichnete Gewinde-Ende 14 noch hinter der Deformationszone 13 liegt. In Fig. 7.1 ist der Grundkörper 11 somit vor und hinter der Deformationszone 13 durch das Gewinde des Metallstifts fixiert und gehalten, und auf der Deformationszone 13 lastet kein Druck. Die Deformationszone 13 verbindet vor und hinter ihr liegende Teile des Grundkörpers 11 auf verdrehsichere Weise.

Trotz eines vollständig abgespreizten Spreizmechanismus 7 kann der Anpressdruck des Bauteils an den Baukörper erhöht werden, indem die Deformationszone 13 verkürzt wird und der Spreizmechanismus 7 dadurch dem Baukörper angenähert wird. Dazu wird der Metallstift 12 wie in Fig. 7.2 dargestellt weiter in die Befestigungsvorrichtung hineingeschraubt. Das Gewinde-Ende 14 befindet sich dann nicht mehr hinter der Deformationszone 13, und der hinter der Deformationszone 13 liegende Teil des Grundkörpers 11 wird nicht mehr vom Gewinde des Metallstifts 12 gehalten.

Bei weiterem Eindrehen des Metallstifts 12 erhöht sich der Druck auf den Grundkörper 11 und die Deformationszone 13 wird wie in Fig. 7.3 gezeigt zusammengedrückt. Die Deformationszone 13 ist konstruktiv darauf ausgerichtet, dass sie unter Druck in Längsrichtung der Befestigungsvorrichtung verkürzt werden kann und kann z. B. eine gegen die Längsachse der Befestigungsvorrichtung zeigende Nut oder Einkerbung aufweisen, damit eine Knickbewegung von der Längsachse wegführt.

Die beschriebene Ausführungsform ist lediglich als illustratives Beispiel zu verstehen, welche im Rahmen der Erfindung beliebig erweitert oder abgewandelt werden kann.

Die erfindungsgemässe Vorrichtung kann von der beschriebenen Ausführungsform in vielerlei Hinsicht abweichen, so kann z. B. die Befestigungsvorrichtung auch aus weniger oder mehr Teilen bestehen als den hier beschriebenen vier Teilen (Grundkörper, Metallstift, Führungsteil und Spreizelement), je nachdem wie die einzelnen Elemente zusammengefasst oder separiert werden. So können z. B. die Spreizteile einzeln ausgebildet werden statt zusammen als Spreizelement. Das Führungsteil kann etwa auch statt separat hergestellt direkt am Grundkörper ausgebildet sein. Der Grundkörper kann aber auch aus verschiedenen Teilen zusammengesetzt sein, so können beispielsweise Verankerungsvorrichtung, Distanzteil und/oder Spreizmechanismus separat hergestellt werden. Je nach Anwendung, Handhabung, Herstellungskosten, vorgesehener Haltekraft an Baukörper und/oder Bauteil, Beschaffenheit von Baukörper und/oder Bauteil und weiteren Aspekten kann die Befestigungsvorrichtung in allen Dimensionen variiert werden, und die Zahl, Grösse und Form der Halteteile bzw. Spreizteile kann den Anforderungen entsprechend angepasst werden. Die verwendeten Materialien können mehr als nur Kunststoff und Metall umfassen und sollten ebenfalls für jedes Element entsprechend den Anforderungen angepasst werden.

Es liegt im Rahmen der Erfindung, dass der Verankerungsteil auch anders im oder am Baukörper befestigt wird als durch einen Dübel mit Schraube, so etwa kann die Spitze als Haken oder in anderer Form ausgebildet sein, welche ein Verkeilen, Einklemmen, Aufhängen, Einschnappen, Einrasten usw. erlaubt. Der Metallstift kann aber beispielsweise auch direkt mit dem Baukörper verschraubt werden, so etwa durch Selbstbohrgewinde oder durch vorgefertigte Gegenstücke wie Gewinde etc., oder wie ein Nagel eingeschlagen werden. Durchmesser, Länge und Art der Verankerungsvorrichtung sind dabei an die vorgesehene Haltekraft und Befestigungsmethode anpassbar. Je nach Ausführungsform kann ein Anschlag für die Verankerungsvorrichtung vorteilhaft sein oder weggelassen werden. Auf einen Metallstift kann auch gänzlich verzichtet werden, oder es können mehrere verwendet werden, wobei nicht alle zur Verankerung im Baukörper dienen müssen. Der Metallstift muss nicht einen Innensechskant beinhalten, sondern kann z. B. ebenso gut für Kreuz-, Schlitz- und Torxwerkzeug oder Gabelschlüssel vorbereitet sein oder gar nicht für Drehbewegungen ausgelegt sein.

Der Spreizmechanismus kann in vielerlei Hinsicht variiert werden. Ob, wie und wo z. B. die Spreizteile an den Haftteilen haften, ist wie die detaillierte Ausgestaltung der Haftteile bzw. Spreizteile von der jeweiligen Aufgabe bestimmt, ebenso wie die optionale Ausbildung eines Anschlags zur Begrenzung des Abspreizens. Die Greifpunkte der Haftteile können in der Anzahl variieren und auch an verschiedenen Orten vorgesehen sein. Die Spreizteile können an den Greifpunkten fest oder auch lose mit den Haftteilen verbunden sein, und es können z. B. auch mehrere Greifpunkte während verschiedenen Phasen des Abspreizens verwendet werden. Der Abspreizmechanismus kann aber auch ohne Greifpunkte realisiert werden, indem z. B. die Spreizteile ganz einfach wie Keile zwischen die Haftteile und Teile der Befestigungsvorrichtung getrieben werden (keilförmige oder runde Spreizteilspitzen eignen sich hierfür besonders gut). Je näher sich solche Spreizteile der Knickachse nähern, desto stärker werden die Haftteile abgespreizt. Auf Führungsteile kann z. B. in diesen wie auch in anderen Ausführungsvarianten verzichtet werden.

Die Haftteile und die Spreizteile können auch statt durch Knickachsen z. B. durch Scharniere oder biegeelastische Verbindungen an der Befestigungsvorrichtung angebracht werden. Sie können je nach Anwendung auch aus verschiedenen Materialien bestehen (z. B. verschiedene Kunststoffe, Metalle oder Gummi) und separat hergestellt werden. Ein Spreizelement aus leicht deformierbarem Material wie etwa Gummi oder weichem Kunststoff kann ebenfalls vorteilhaft eingesetzt werden, wenn etwa dank der Deformation des Spreizteils im gegen das Haftteil gedrückten, abgespreizten Zustand eine grosse Auflagefläche entsteht, was zusätzliche Stabilität bringen kann.

Der Metallstift muss nicht sowohl den Verankerungs- als auch den Spreizmechanismus betätigen, sondern kann etwa auch nur in jeweils einem angewendet werden. Beide Mechanismen können zur gleichzeitigen oder zeitlich versetzten, gemeinsamen oder separaten Bedienung konzipiert sein. Werden beide Mechanismen nicht fest miteinander verknüpft betrieben (im Gegenteil zum fest verknüpften und gleichzeitigen betriebenen Ausführungsbeispiel), so kann sich daraus der Vorteil ergeben, dass der unabhängige Betrieb der Mechanismen eine flexible Anpassung der Befestigung erlaubt, z. B. einen anpassbaren und nachjustierbaren Anpressdruck, ein Nachziehen für den Fall, dass die Verankerung lose wird oder der Spreizmechanismus im Bauteil Spiel hat oder Ähnliches.

Es kann in einer besonders vorteilhaften Variante neben den Verankerungs- und Spreizmechanismen ein zusätzlicher, dritter Mechanismus in der Befestigungsvorrichtung ausgebildet werden, welcher eine Veränderung des Anpressdrucks erlaubt. So erlaubt beispielsweise bei fest verknüpftem Verankerungs- und Spreizmechanismus ein Verkürzungsmechanismus wie beispielsweise eine in den Figs.7.1 - 7.3 dargestellte Deformationszone zwischen Verankerungs- und Spreizmechanismus eine Annäherung von Verankerungs- und Spreizmechanismus und dadurch ein weiteres Erhöhen des Anpressdrucks (selbst bei maximal abgespreiztem Spreizmechanismus). Eine solche Deformationszone könnte beispielsweise im beschriebenen Ausführungsbeispiel im Distanzteil vor den Verdrehsicherungen angeordnet sein. Eine Deformationszone kann aber auch an anderen Stellen der Befestigungsvorrichtung angeordnet sein, und sie kann auch ganz anders ausgeformt sein. Die Deformationszone kann als eine oder mehrere Nuten oder Kerben im Grundkörper ausgebildet sein, welche gegen die Längsachse der Befestigungsvorrichtung und/oder von ihr weg zeigen. Es kann aber auch ein anderer Mechanismus oder eine andere Methode gewählt werden, um die Distanz zwischen Verankerungsvorrichtung und Spreizmechanismus zu verändern und insbesondere zu verkürzen.

Eine auf der Befestigungsvorrichtung befestigte oder ausgebildete Verdrehsicherung ist nicht in jedem Fall nötig, und sie kann in verschiedenen Grössen, Formen und Ausbildungsformen an allen möglichen im Bauteil zu liegen kommenden Stellen vorgesehen sein.

Die Befestigungsvorrichtung kann sowohl senkrecht zur Oberfläche des Baukörpers als auch schräg zur Oberfläche des Baukörpers montiert werden. Je nach Beschaffenheit des Baukörpers und/oder des Bauteils kann damit eine bessere Verankerung erreicht werden, insbesondere wenn die Längsachsen aller Befestigungsvorrichtungen nicht parallel zueinander stehen (z. B. wenn die Befestigungsvorrichtungen gegeneinander verkreuzt montiert sind). Zudem können die Bauteile auch besser an am Baukörper schwierig erreichbaren (z. B. durch Dachkanten, Vorsprünge oder Regenrinnen verdeckten) Stellen befestigt werden, wenn die Befestigungsvorrichtungen an diesen Stellen schräg zur Oberfläche des Baukörpers montiert werden.

## Patentansprüche

1. Befestigungsvorrichtung zum Befestigen eines Bauteils, insbesondere eines Dämmstoffkörpers an einem Baukörper, umfassend
a) einen vorderen Abschnitt mit einer Verankerungsvorrichtung (5) zum Verankern der Befestigungsvorrichtung im Baukörper und
b) einen hinteren Abschnitt mit einem Spreizmechanismus (7) mit mindestens einem beweglichen, sich bei Betätigung des Spreizmechanismus (7) in das Bauteil eindrückenden Halteteil (9.1 - 9.4) zum Fixieren des Bauteils,
c) wobei der Halteteil (9.1 - 9.4) ein gelagertes Ende und ein quer zu einer Längsrichtung der Befestigungsvorrichtung abspreizendes Ende hat,
**dadurch gekennzeichnet, dass**
d) das gelagerte Ende in Längsrichtung der Befestigungsvorrichtung während des Abspreizens des abspreizenden Endes ortsfest bezüglich dem vorderen Abschnitt der Befestigungsvorrichtung ist.

2. Befestigungsvorrichtung nach Anspruch 1, **dadurch gekennzeichnet, dass** der Spreizmechanismus (7) ein mit dem mindestens einen Halteteil (9.1 - 9.4) zusammenwirkendes Spreizteil (8.1 - 8.4) aufweist, wobei sich das eine Ende des Spreizteils (8.1 - 8.4) bei Betätigung des Spreizmechanismus (7) quer zur Längsrichtung der Befestigungsvorrichtung bewegt und dabei das abspreizende Ende des Halteteils (9.1 - 9.4) stützt.

3. Befestigungsvorrichtung nach Anspruch 1 oder 2, **dadurch gekennzeichnet, dass** der mindestens eine Halteteil (9.1 - 9.4) eine dem Bauteil zugewandte Seite besitzt, die flächig-stumpf ausgebildet ist.

4. Befestigungsvorrichtung nach einem der Ansprüche 2 bis 3, **dadurch gekennzeichnet, dass** mindestens zwei Spreizteile (8.1 - 8.4) vorgesehen sind, wobei diese Spreizteile (8.1 - 8.4) an einem Spreizelement (4) ausgebildet sind, welches sich relativ zur Befestigungsvorrichtung frei bewegen kann.

5. Befestigungsvorrichtung nach einem der Ansprüche 1 bis 4, **dadurch gekennzeichnet, dass** in einem mittleren Abschnitt zwischen dem vorderen und dem hinteren Abschnitt ein Distanzteil (6) vorgesehen ist, an welchem der mindestens eine Halteteil (9.1 - 9.4) angeformt ist.

6. Befestigungsvorrichtung nach Anspruch 5, **dadurch gekennzeichnet, dass** die Halteteile (9.1 - 9.4) und das Distanzteil (6) am selben Stück (also einstückig mit) der Befestigungsvorrichtung ausgebildet sind.

7. Befestigungsvorrichtung nach einem der Ansprüche 1 bis 6, **dadurch gekennzeichnet, dass** ein Metallstift (2) sowohl mit der Verankerungsvorrichtung (5) als auch dem Spreizmechanismus (7) gekoppelt ist, um diese, insbesondere gleichzeitig zu betätigen.

8. Befestigungsvorrichtung nach einem der Ansprüche 2 bis 7, **dadurch gekennzeichnet, dass** mindestens ein Halteteil (9.1 - 9.4) über mindestens einen Greifpunkt verfügt, an welchem ein Spreizteil (8.1 - 8.4) Halt finden kann.

9. Befestigungsvorrichtung nach einem der Ansprüche 2 bis 8, **dadurch gekennzeichnet, dass** zwischen Spreizelement (4) und Halteteil (9.1 - 9.4) ein separater Führungsteil (3) vorgesehen ist, welcher das Spreizelement (4) in Längsrichtung verdrehsicher führt.

10. Befestigungsvorrichtung nach Anspruche 9, **dadurch gekennzeichnet, dass** der Führungsteil (3) einen Anschlag für das Spreizelement (4) aufweist, so dass eine Bewegung des Spreizelementes (4) in Längsrichtung begrenzt ist.

11. Befestigungsvorrichtung nach einem der Ansprüche 1 bis 10, **dadurch gekennzeichnet, dass** sie eine Verdrehsicherung (10) gegenüber dem Bauteil aufweist.

12. Befestigungsvorrichtung nach einem der Ansprüche 1 bis 11, **dadurch gekennzeichnet, dass** sie einen Anschlag aufweist, welcher eine Eindringtiefe in den Baukörper auf eine maximale Länge begrenzt.

13. Befestigungsvorrichtung nach einem der Ansprüche 1 bis 12, **dadurch gekennzeichnet, dass** das vordere Ende des Halteteils (9.1 - 9.4) an der Befestigungsvorrichtung gelagert und das hintere Ende abspreizbar ist.
